# EUROPÄISCHE PATENTANMELDUNG

(11) **EP 2 380 741 A1**
(43) Veröffentlichungstag der Anmeldung: **26.10.2011**
(21) Anmeldenummer: 10160844.6
(22) Anmeldetag: 23.04.2010
(51) Int. Cl.: B41F 33/00, G01N 21/35, G01N 21/84

(54) **Verfahren und Vorrichtung zum Messen der Dicke einer Feuchtmittel- oder Farbemulsionsschicht im Offset-Druckverfahren**

(71) Anmelder: GVT GmbH, 61348 Bad Homburg (DE)
(72) Erfinder: Dotzel, Klaus-P., Dr., 61348 Bad Homburg (DE)
(74) Vertreter: KEIL & SCHAAFHAUSEN Patentanwälte

(57) **Zusammenfassung**

Es werden ein Verfahren und eine Vorrichtung zum Messen der Dicke einer Feuchtmittel- oder Farbemulsionsschicht auf der Oberfläche eines Druckbildtragenden Zylinders (1;3) einer Offset-Druckmaschine angegeben, bei dem man die Absorption von reflektierten NIR-Strahlungen (26) durch das aufgetragene Feuchtwasser während der Druckproduktion misst. Störungen auf Grund von Reflexionen werden über eine Glanzfalle eliminiert. Eine positionsgesteuerte Regelung des Feuchtwasserhaushaltes wird über eine Maschinensynchronisation der Mess- und Empfangseinheit zuverlässig unterstützt.

## Beschreibung

Die Erfindung betrifft ein Verfahren zum Messen der Dicke einer Feuchtmittel-oder Farbemulsionsschicht im Offset-Druckverfahren, bei dem IR-Strahlung auf die Oberfläche eines Druckbild-tragenden Zylinders gerichtet und reflektierte IR-Strahlung ausgewertet wird.

Ferner betrifft die Erfindung eine Vorrichtung zum Messen der Dicke einer Feuchtmittel- und/oder Farbemulsionsschicht auf einer Oberfläche eines Druckbild-tragenden Zylinders mit einer IR-Strahlungsquelle, die IR-Strahlung auf die Oberfläche des Zylinders richtet, und einem IR-Strahlungsempfänger, der reflektierte IR-Strahlung von der Oberfläche des Zylinders empfängt, und einer Auswerteeinrichtung, die mit dem IR-Strahlungsempfänger verbunden ist.

Beim Offset-Druckverfahren ist es wichtig, eine relativ dünne und möglichst gleichmäßig verteilte Feuchtmittelschicht auf die gesamte Oberfläche der Druckplatte aufzutragen. Das wässrige Feuchtmittel benetzt die nicht bildführenden Teile der Druckplatte und verhindert dort eine Annahme der öligen Druckfarbe. Weiter wird durch die Rotation der Zylinder Feuchtmittel in die Druckfarbe emulgiert und damit die rheologischen und drucktechnischen Eigenschaften verändert. Wenn zu viel Feuchtmittel, z.B. Feuchtwasser, aufgetragen wird oder das Feuchtmittel ungleichmäßig verteilt ist, dann führt dies zu Störungen des Farbflusses im Farbwerk und damit zu einer ungleichmäßigen Einfärbung der Druckplatte. Ferner beeinflusst ein Zuviel an Feuchtmittel die Dimensionsstabilität des Druckpapiers, was beim Mehrfarbendruck zum Dublieren und zu Passerdifferenz führen kann. Wenn zu viel Feuchtmittel verwendet wird, wird auch die Trocknung der Druckfarben stark beeinträchtigt. Auf der anderen Seite kann die Feuchtmittelmenge auf der Druckplatte nicht beliebig reduziert werden, da sonst "Zuschmieren" bzw. "Tonen" auftritt und damit nicht-druckende Bildstellen ebenfalls Farbe übertragen.

Die richtige Einstellung der Druckmaschine im Hinblick auf die Feuchtmittelschicht wird in der Praxis von einem erfahrenen Drucker anhand von Vorgabedaten vorgenommen. Allerdings ist eine derartige empirische Einstellung oft fehlerbehaftet und führt nicht zu optimalen Ergebnissen und zu Druckschwierigkeiten.

Es wurden daher schon unterschiedliche Wege vorgeschlagen, um die Dicke der Feuchtmittelschicht zu ermitteln, ohne dass sie Eingang in die Praxis gefunden haben. So zeigt DE 34 44 784 A1 ein "Verfahren zum Überwachen des Farbstoff/Wasser-Verhältnisses im lithographischen Druckverfahren". Hier wird ein Lichtstrahl durch eine Optik auf die Oberfläche einer Farbformwalze gerichtet, der unter vorbestimmten Winkeln reflektiert wird. In diesen unterschiedlichen, definierten Reflexionswinkeln sind Lichtempfänger angeordnet, die das reflektierte Licht erfassen.

DE 24 12 234 B2 beschreibt ein anderes "Verfahren und eine Vorrichtung zum Messen einer Feuchtwasserschichtdicke", bei der zwei IR-Lichtströme in Form von definierten, monochromatischen Mess- und Vergleichsimpulsen senkrecht auf die Druckplatte gerichtet werden. Eine Aufnahmeoptik in einem definierten Winkel erfasst die reflektierte Strahlung.

DE 36 11 645 C2 beschreibt eine ähnliche Vorgehensweise zur "Regelung der Farb- und Feuchtmittelanteile einer Emulsionsschicht auf der Druckplatte einer Offset-Druckmaschine". Zwei unterschiedliche IR-Lichtströme für den Farbanteil und Feuchtmittelanteil werden unter einer definierten Winkelung auf die Oberfläche der Druckplatte gerichtet und das rechtwinklig zur Oberfläche reflektierte Licht wird von einer Aufnahmeoptik erfasst.

In allen Fällen ist das Ergebnis nicht immer befriedigend. Die Streubreite der Messsignale ist vielfach so groß, dass die Messsignale nicht zuverlässig geeignet sind, um eine Regelung der Feuchtmittelmenge zu bewirken.

Der Erfindung liegt die Aufgabe zugrunde, die Dicke der Feuchtmittel- oder Farbemulsionsschicht zuverlässig zu messen als Grundlage der Steuerung des komplexen Feuchtmittel/Druckfarben-Systems.

Diese Aufgabe wird bei einem Verfahren der eingangs genannten Art dadurch gelöst, dass die IR-Strahlen NIR-Strahlen, vorzugsweise im Wellenlängenbereich von 700 nm bis 2500 nm, sind und dass ein reflektierter NIR-Strahl als Messstrahl vom Feuchtmittel oder der Farbemulsion im Wesentlichen absorbiert wird und der andere NIR-Strahl als Vergleichsstrahl vom Feuchtmittel oder der Farbemulsion im Wesentlichen nicht absorbiert wird.

Durch die Vergleichsmessung der Absorptionsdifferenz zweier monochromatischer NIR-Wellenimpulse, die sich im Wesentlichen durch das Absorptionsverhalten gegenüber Wasser unterscheiden, ergibt sich ein Signal, dessen Größe praktisch ausschließlich von der Dicke der Feuchtmittel- oder Farbemulsionsschicht abhängt.

In Weiterbildung des Erfindungsgedankens wird der Strahlengang der reflektierten NIR-Strahlung parallel zum Strahlengang der emittierten NIR-Strahlung eingerichtet. Das heißt, die reflektierte Strahlung fällt in der entgegengesetzten Richtung der Emission auf eine Auswerteeeinrichtung.

An der Reflexionsschicht wird bevorzugt zur Unterdrückung von Reflexionsfehlern der reflektierten NIR-Strahlungen eine Glanzfalle verwendet.

Es wird davon ausgegangen, dass die hohe Streuung der bisher ermittelten Werte auf hohe Intensitätsschwankungen an reflektierenden, bewegten Zylinderoberflächen mit metallischem Hintergrund zurückzuführen ist. Diese werden durch die Glanzfalle eliminiert. Vorzugsweise lässt sich die Glanzfalle zudem durch eine entsprechende geometrische Anordnung der Sende- und Empfangseinheit bezogen auf die reflektierende Messoberfläche realisieren.

Die NIR-Strahlung wird in der Ebene, in der die Rotationsachse des Zylinders liegt, unter einem vorbestimmten Winkel kleiner als 90° zur Rotationsachse auf die Oberfläche des Zylinders gerichtet und die reflektierte NIR-Strahlung wird im gleichen Winkel empfangen. Dies ist eine relativ einfache Ausgestaltung, um eine Glanzfalle zu bilden. Es wird vermieden, dass direkt reflektierte NIR-Strahlung vom NIR-Strahlungsempfänger erfasst wird. Empfangen wird vielmehr nur den Anteil der diffus gestreuten NIR-Strahlung, der in Richtung des Senders unter Ausschluss der Spiegelreflexion zurückgestrahlt wird. Damit wird die Intensität der empfangenen NIR-Strahlung zwar geringer. Dies kann aber durch entsprechende Signalverstärkung wieder kompensiert werden. Andererseits werden aber praktisch vollständig alle Einflüsse eliminiert, die von metallischen Oberflächen und dem damit verbundenen Glanz oder der damit verbundenen Spiegelung stammen.

Durch die gleiche Winkelung zwischen emittiertem und reflektiertem Strahl bezogen auf die Oberfläche des Messbereiches, das heißt durch die parallele Ausrichtung der Strahlengänge, ergibt sich eine relativ einfach nachzuvollziehende Zuordnung zwischen dem gesendeten und dem empfangenen NIR-Strahl.

Vorzugsweise weicht der Strahlengang der NIR-Strahlung von einer Senkrechten zur Oberfläche des Zylinders um 3° bis 20° ab. In diesem Winkelbereich ist sichergestellt, dass auch die diffus reflektierte oder reflektierte NIR-Strahlung noch eine ausreichende Stärke hat, um eine geeignete Signalstärke zur Ermittlung einer Kenngröße gewinnen zu können.

Alternativ oder zusätzlich zu der winkelmäßigen Anordnung der NIR-Strahlungsquellen und -empfänger als Glanzfalle kann auch einen Polarisationsfilter verwendet werden. Der Polarisationsfilter ist dann so ausgerichtet, dass er Effekte eliminiert, die von Glanz oder Spiegelungen herrühren. Der Polarisationsfilter lässt z.B. nur die Wellen der NIR-Strahlung passieren, die sich in einer Ebene ausbreiten, auf der die Rotationsachse steht. Auch damit wird sichergestellt, dass die Kenngröße ausschließlich aus den diffus reflektierten NIR-Strahlungen von der Oberfläche des Zylinders gewonnen wird.

In bevorzugter Weise wird eine vergleichende Auswertung der Mess- und Vergleichsstrahlung nur an mindestens einem vorbestimmten Bereich der Oberfläche vorgenommen. Das heißt, die Messung kann entweder an mindestens einem definierten Messbereich des die Druckplatte tragenden Plattenzylinders an mindestens einer Messposition vorgenommen werden, oder die Messung kann an mindestens einem definierten Messbereich des Gummizylinders an mindestens einer Messposition vorgenommen werden.

Damit ergibt sich eine klar definierte Messposition, an der immer die gleichen sonstigen Verhältnisse herrschen. Wenn sich hier etwas ändert, dann kann es nur die Dicke der Feuchtwasserschicht sein. Dies erleichtert die Auswertung.

Vorzugsweise ist der Bereich ein nicht-druckender Bereich oder ein definierter druckender Bereich (Vollton oder definierter Raster) auf einem Druckbild-tragenden Zylinder. Ein nicht-druckender Bereich ist ein Bereich, an dem keine Druckfarbe übertragen wird. Dieser Bereich wird von der Feuchtmittelschicht benetzt, er nimmt aber keine Farbe an. An einem derartigen nicht-druckenden Bereich kann daher die Dicke der Feuchtmittelschicht relativ zuverlässig ermittelt werden. Ein druckender Messbereich ist hingegen ein Bereich, in dem Farbe vollflächig oder mit einem definierten Raster auf das zu bedruckende Medium übertragen wird. Hier lässt sich die Dicke der Farbemulsionschicht durch den Wassergehalt messen.

Bevorzugt werden die Reflexionswerte beider NIR-Strahlungen anhand von definierten Messpositionen ausgewertet. Die exakte Positionierung in Laufrichtung der Druckmaschine erfolgt über die Synchronisation der NIR-Messeinheiten mit der Druckmaschine über einen Drehwinkelgeber. Quer zur Maschinenlaufrichtung erfolgt die Positionierung über eine Traverse parallel zur Zylinderachse, auf der die Sende- und Empfangseinheit montiert sind. Auf diese Weise ist sichergestellt, dass man immer nur den gleichen Bereich für die Auswertung verwendet.

Vorzugsweise verwendet man einen ersten monochromatischen NIR-Strahl und einen zweiten monochromatischen NIR-Strahl, wobei die NIR-Strahlen gleichzeitig oder nacheinander auf die Oberfläche gerichtet werden. Die Wellenlängen gehören zum nahen Infrarotbereich (NIR-Bereich) und liegen erfindungsgemäß im Bereich von etwa 700 nm bis etwa 2500 nm. In diesem Fall wird einer der beiden Strahlen als Vergleichsstrahl und der zweite als Messstrahl für die Absorption durch das Feuchtwasser verwendet.

Richtet man einerseits beide Strahlen gleichzeitig auf die Messstelle, müssen die beiden reflektierten Strahlen entsprechend getrennt über zwei Empfänger erfasst werden. Das heißt, die Messung erfolgt durch gleichzeitig emittierte NIR-Strahlen unterschiedlicher Wellenlänge simultan an der mindestens einen Messposition synchron mit der Rotationsgeschwindigkeit des Druckbild-tragenden Zylinders und die reflektierten NIR-Strahlen werden durch einen wellenlängenselektiven Detektor erfasst, z.B. durch Prismen, Gitter oder Diodenarrays.

Das Verfahren kann bevorzugt andererseits so geführt werden, dass die Messung durch nacheinander emittierte NIR-Strahlen unterschiedlicher Wellenlänge zeitlich versetzt an der mindestens einen Messposition synchron mit der Rotationsgeschwindigkeit des Druckbild-tragenden Zylinders erfolgt und die reflektierten NIR-Strahlen über einen gemeinsamen NIR-Strahlungsempfänger erfasst werden.

Die nacheinander emittierten NIR-Strahlen können z.B. durch ein maschinensynchrones Wechseln von Filtern oder Strahler erzeugt werden. Dann genügt ein sequentiell arbeitender NIR-Strahlungsempfänger zur Auswertung. Dies ist immer dann möglich, wenn zwischen einzelnen Umdrehungen des Zylinders keine allzu großen Änderungen der Feuchtmittelschicht zu erwarten sind. Durch die relative Messung werden Unterschiede durch Verschmutzung des Feuchtwassers oder unterschiedlichen Druckplattenoberflächen eliminiert.

Vorzugsweise erfolgt die Kalibrierung der Absorptionsdifferenz auf die Feuchtwasserschichtstärke über einen geeigneten Absorptionsfilter.

Vorzugsweise wird die gemessene Schichtdicke zum Regeln des Auftrags des Feuchtmittels verwendet. Da nunmehr ein Messwert mit einer ausreichenden Zuverlässigkeit zur Verfügung steht, kann dieser zur Regelung der Feuchtwerke und der effektiven Druckfarbenmenge unter Berücksichtigung der Produktionsbedingungen im Druck verwendet werden.

Die gleiche Winkelung zwischen emittierter und reflektierter NIR-Strahlung erleichtert die Schichtstärkemessung durch Kompensation störender Effekte, wie Schwankungen der Umgebungsverhältnisse, und vereinfacht die Auswertung.

Die Aufgabe der vorliegenden Erfindung wird bei einer Vorrichtung der eingangs genannten Art dadurch gelöst, dass die Vorrichtung eine Messoptik mit einer NIR-Strahlungsquelle zur Erzeugung von emittierter NIR-Strahlung und einem NIR-Strahlungsempfänger zum Empfangen von reflektierter NIR-Strahlung umfasst, wobei die Strahlengänge der emittierten NIR-Strahlung und der reflektierten NIR-Strahlung parallel zueinander stehen. Zudem umfasst die Vorrichtung eine Auswerteeinrichtung, die mit der Messoptik verbunden ist, zur Auswertung der von dem NIR-Strahlungsempfänger übermittelten Daten. Die erfindungsgemäße Vorrichtung ist insbesondere zur Ausführung des erfindungsgemäßen Verfahrens geeignet.

Optional ist die Messoptik mit NIR-Strahlungsquelle und NIR-Strahlungsempfänger von einem Gehäuse umgeben.

Bevorzugt kann die Vorrichtung ferner ein Filterrad mit vorzugsweise zwei Fenstern, die mit unterschiedlichen, wellenlängenselektiven Filtern versehen sind, im Strahlengang der emittierten NIR-Strahlung und eine Synchronisationseinrichtung, die mit dem Filterrad und dem Druckbild-tragenden Zylinder verbunden ist, aufweisen.

Alternativ dazu oder zusätzlich kann die Messoptik der Vorrichtung ferner mindestens ein Gitter, ein Prisma oder ein NIR-Diodenarray im Strahlengang der reflektierten NIR-Strahlung aufweisen.

Die bauliche Ausgestaltung wird durch Verringerung des Platzbedarfs und der Installationsmöglichkeiten vereinfacht. In einer Offset-Druckmaschine steht in der Regel nur relativ wenig Platz zur Verfügung, um die zur Messung benötigten Vorrichtungen unterbringen zu können. Es ist von Vorteil, wenn die emittierte und reflektierte NIR-Strahlungen in einem oder zwei parallel verlaufenden Lichtwellenleitern von der Lichtquelle zur Messposition und von der Messposition zum NIR-Empfänger übertragen werden. In diesem Fall wird die Einbaugröße an der Messstelle minimiert und man kann die Sende-, Empfangs- und Auswerteeinrichtung außerhalb des Arbeitsbereiches am Plattenzylinder, entfernt von der Messposition anordnen.

Auch ist von Vorteil, wenn die NIR-Strahlungsquelle und der NIR-Strahlungsempfänger - das können auch nur die Enden des Lichtwellenleiters sein - auf einer Befestigungsvorrichtung wie einer Traverse, die parallel zur Rotationsachse des Zylinders gerichtet ist, variabel positionierbar montiert sind. In Kombination mit der Synchronisation der Druckmaschine ergibt sich die Möglichkeit, auf allen geeigneten Positionen einer Druckplatte und/oder mehrere nebeneinander auf dem Druckzylinder montierte Druckplatten mit einer Messeinheit zu überwachen und partiell zu regeln.

Weitere Ziele, Merkmale, Vorteile und Anwendungsmöglichkeiten ergeben sich aus der nachfolgenden Beschreibung von Ausführungsbeispielen der Erfindung anhand der Figuren. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung. Es zeigen
- Fig. 1: eine schematische Darstellung eines Druckwerks in einer Offset-Druckmaschine und
- Fig. 2: eine schematische Darstellung einer Vorrichtung zum Messen der Dicke einer Feuchtmittel- oder Farbemulsionsschicht auf einem Druckbild-tragenden Zylinder einer Offset-Druckmaschine.

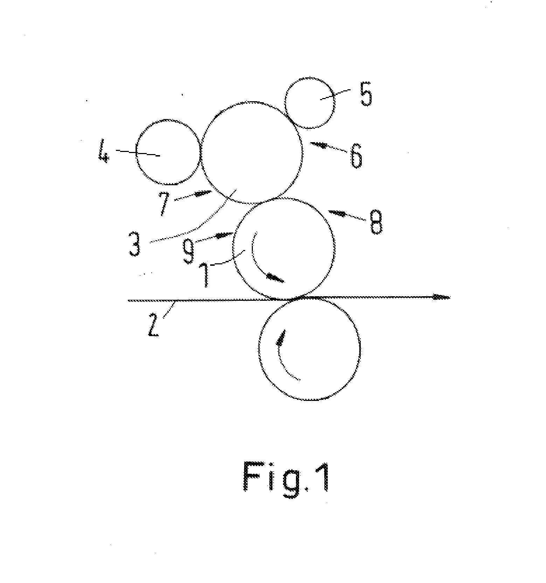

Fig. 1 zeigt in stark schematisierter Darstellung ein Druckwerk einer im Übrigen nicht näher dargestellten Offset-Druckmaschine zum Bedrucken einer Papierbahn 2.

Das Druckwerk weist einen Plattenzylinder 3 auf, der eine Druckplatte 15 trägt. Die Druckplatte 15 definiert das später auf der Papierbahn 2 erscheinende Druckbild. Über ein Feuchtwerk 4 wird Feuchtwasser (oder ein anderes Befeuchtungsmittel) auf die Druckplatte 15 übertragen. Ein Farbwerk 5 dient zum Einfärben der Druckplatte 15 des Plattenzylinders 3. Das eingefärbte Druckbild der Druckplatte 15 wird über einen Gummizylinder 1 auf die Papierbahn 2 übertragen. Ein derartiger Aufbau ist im Prinzip bekannt.

Die möglichen Messpositionen 20 zur Feuchtwassermessung auf dem die Druckplatte 15 tragenden Plattenzylinder 3 sind mit 6 und 7, die auf dem Gummizylinder 1 mit 8 und 9 bezeichnet.

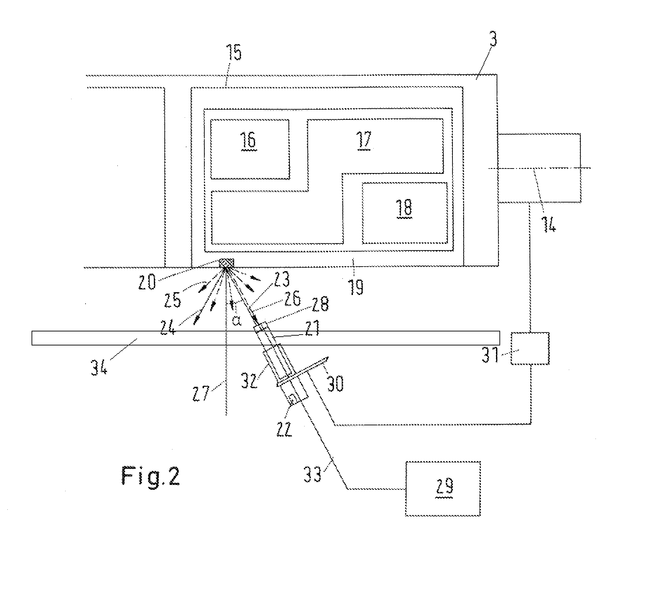

Der Plattenzylinder 3 ist schematisch in Fig. 2 dargestellt. Auf dem Plattenzylinder 3 sind mehrere Druckplatten 15 befestigt (nur eine ist dargestellt). Auf der Druckplatte 15 sind druckende Bereiche 16 bis 18 und nicht-druckende Bereiche 19 vorgesehen. Über das Farbwerk 5 wird Farbe auf die druckenden Bereiche 16 bis 18 der Druckplatte 15 übertragen. Über das Feuchtwerk 4 wird Feuchtmittel auf die nicht-druckenden Bereiche 19 übertragen damit diese Bereiche 19 frei von Farbe bleiben. Bei diesem Vorgang wird Feuchtwasser in die Farbe emulgiert. Das Druckbild wird von der Druckplatte 15 auf den Gummizylinder 1 und von dort auf die Papierbahn 2 übertragen. Dementsprechend ist sowohl der die Druckplatte 15 tragende Plattenzylinder 3 als auch der Gummizylinder 1 ein Druckbild-tragender Zylinder.

Auf der Druckplatte 15 sind die druckenden Bereiche 16 bis 18 als oleophile und hydrophobe Bereiche ausgebildet. Die nicht-druckenden Bereiche 19 sind hingegen hydrophil und oleophob. Dementsprechend wird eine Farbe-Feuchtmittel-Emulsion aus ölbasierter Druckfarbe und Feuchtwasser gebildet, die auf die druckenden Bereiche 16 bis 18 der Druckplatte 15 aufgetragen wird. Das Feuchtwasser benetzt hingegen die nicht-druckenden Bereiche 19, so dass die ölige Druckfarbenemulsion dort abgewiesen wird.

Die aufgetragene Dicke der Feuchtwasserschicht soll möglichst genau eingestellt werden. Sie liegt in der Regel zwischen 1 µm und 6 µm. Eine zu dicke Feuchtwasserschicht führt zu einem höheren Feuchtwassergehalt in der Farbemulsion, was zu einer Farbspaltung mit geringerer Farbübertragung im Druck führt. Ein zu niedriger Feuchtwassergehalt hingegen führt zu einer Farbspaltung mit höherer Farbübertragung bis zum Einfärben der nicht-druckenden Teile im Druck.

Um die Feuchtwasserschichtdicke zu messen, wird auf der mindestens einen Druckplatte 15, mindestens eine Messposition 20 (bzw. 6, 7, 8, 9) definiert. Die Messposition 20 befindet sich im nicht-druckenden Bereich 19, also dort, wo keine Farbe haften bleiben soll, sondern nur Feuchtwasser. Alternativ kann die Messposition 20 auch am Gummizylinder 1 vorgesehen sein. In beiden Fällen kann die Schichtstärke des Feuchtwassers gemessen werden. Wenn man hingegen die Dicke der Farbemulsionsschicht messen möchte, verwendet man eine (nicht näher dargestellte) Messposition, mit der vollflächig Farbe übertragen wird.

Eine Messoptik 21 ist variabel positionierbar auf eine Traverse 34 montiert, mit der mehrere Messpositionen 20 bzw. 6, 7, 8, 9 und Druckplatten exakt quer zur Zylinderachse angesteuert werden. In Axialrichtung des Zylinders 3 können unterschiedliche Messpositionen 20 angesteuert und dort jeweils die Dicke der Feuchtwasserschicht oder der Farbemulsionsschicht gemessen werden, ohne dass man mehrere derartige Messsysteme notwendid sind.

In Laufrichtung der Druckmaschine erfolgt die Ansteuerung der Messpositionen 20 (bzw. 6, 7, 8, 9) über die Drehgeberposition der Synchronisationseinrichtung 31. Gleichzeitig steuert die Synchronisationseinrichtung 31 die wechselnde NIR-Messung über das Filterrad 30.

Die Messoptik 21 weist eine NIR-Strahlungsquelle 22 auf, die NIR-Strahlen 23 auf die Messposition 20 richtet. Die NIR-Strahlen 23 werden dort, wie durch einen Pfeil 24 dargestellt, nach dem Gesetz "Einfallswinkel = Ausfallswinkel" von der Messposition 20 reflektiert. Daneben entsteht diffus reflektierte NIR-Strahlung, die durch gestrichelte Pfeile 25, 26 dargestellt ist. Die NIR-Strahlen 23 liegen in einer Ebene, in der auch die Rotationsachse 14 angeordnet ist. Darüber hinaus schließen sie mit der Rotationsachse 14 einen Winkel # 90° ein. Zur besseren Erläuterung ist eine Ebene 27 dargestellt, auf der die Rotationsachse 14 senkrecht steht. Die NIR-Strahlen 23 schließen mit dieser Ebene 27 einen Winkel α im Bereich von 3° bis 20° ein, so dass die NIR-Strahlen 23 mit der Rotationsachse 14 einen Winkel im Bereich von 70° bis 87° einschließen und eine Spiegelreflexion vermieden wird.

Die Messoptik 21 weist einen NIR-Strahlungsempfänger 28 auf, der diffus reflektierte NIR-Strahlen 26 empfängt, die in der gleichen Winkelung zur Messposition 20 wie die emittierte NIR-Strahlen 23 liegen.

Der NIR-Strahlungsempfänger 28 steht in Verbindung mit einer Auswerteeinrichtung 29. Die Auswerteeinrichtung 29 wiederum steht in nicht näher dargestellter Weise mit dem Feuchtwerk 4 in Verbindung, um die Menge des aufgetragenen Feuchtwassers so zur regeln, dass die aufgetragene Feuchtwasserschicht und die übertragene Druckfarbenemulsionsschicht definierte Dicke haben.

Zur genauen Positionierung der Messung auf dem Druckbild-tragenden Zylinder 1, 3 schickt die NIR-Strahlungsquelle 22 ihre NIR-Strahlung durch ein Filterrad 30, das in Abhängigkeit von der Rotation des Druckbild-tragenden Zylinders 1, 3 gedreht wird. Hierzu ist in stark schematisierter Darstellung eine Synchronisationseinrichtung 31 vorgesehen. Das Filterrad 30 weist zwei Fenster auf, die mit unterschiedlichen, wellenlängenselektiven Filtern versehen sind, so dass abwechselnd ein NIR-Strahl 23a mit einer zu absorbierenden NIR-Messwellenlänge und ein NIR-Strahl 23b mir einer nicht zu absorbierenden NIR-Vergleichswellenlänge auf die Messposition 20 gerichtet werden. Die Absorption der NIR-Messwellenlänge in der Feuchtmittel- oder Farbemulsionsschicht hängt von der Schichtdicke ab, während die NIR-Vergleichswellenlänge davon im Wesentlichen unbeeinflußt bleibt. Durch einen Vergleich der diffus reflektierten NIR-Messstrahlung 23a und der Normierung der diffus reflektierten NIR-Vergleichsstrahlung 23b lässt sich dann die Feuchtwasserschichtdicke ermitteln.

Zwischen den beiden Fenstern mit den jeweiligen monochromatischen Filtern wird die NIR-Strahlungsquelle 22 abgedeckt. Hierbei ist die Rotation des Filterrades 30 so mit der Rotation des Plattenzylinders 3 sychronisiert, dass ein Fenster immer dann freigegeben wird, wenn der NIR-Strahl auf die Messposition 20 trifft. Die Wellenlängen der NIR-Strahlen liegen im Bereich von 700 nm bis 2500 nm, d.h. im nahen Infrarotbereich (NIR-Bereich).

Die NIR-Strahlungsquelle 22 und der NIR-Strahlungsempfänger 28 sind zweckmäßigerweise in einem gleichen Gehäuse 32 angeordnet. Als NIR-Strahlungsquelle 22 wird hierbei eine Einrichtung angesehen, aus der NIR-Strahlung nach außen austritt. Es kann sich dabei also durchaus auch um eine Stirnseite eines Lichtleiters handeln, dessen andere Seite mit NIR-Strahlung versorgt wird. Dies hat den Vorteil, dass man die eigentliche Erzeugung der NIR-Strahlung dort vornehmen kann, wo genügend Platz zur Verfügung steht. Der nicht näher dargestellte Lichtleiter kann dann den "Transport" der NIR-Strahlung an den Messort übernehmen. In gleicher Weise wird auch der NIR-Strahlungsempfänger 28 als der Ort verstanden, an dem NIR-Strahlung empfangen wird.

In nicht näher dargestellter Weise kann man alternativ oder zusätzlich zu der winkligen Anordnung der Messoptik 21 auch einen Polarisationsfilter verwenden.

Mit beiden Vorgehensweisen erzeugt man den Effekt einer "Glanzfalle", mit deren Hilfe hohe Intensitätsschwankungen an reflektierenden, bewegten Zylinderoberflächen mit metallischem Hintergrund vermieden werden können.

### Bezugszeichenliste

- 1: Gummizylinder
- 2: Papierbahn
- 3: Plattenzylinder
- 4: Feuchtwerk
- 5: Farbwerk
- 6, 7: Messposition (auf dem Plattenzylinder)
- 8, 9: Messposition (auf dem Gummizylinder)
- 14: Rotationsachse des Druckbild-tragenden Zylinders
- 15: Druckplatte
- 16, 17, 18: druckender Bereich
- 19: nicht-druckender Bereich
- 20: Messposition
- 21: Messoptik
- 22: NIR-Strahlungsquelle
- 23: NIR-Strahl
- 24: Spiegel - reflektierter NIR-Strahl
- 25, 26: diffus reflektierter NIR-Strahl
- 27: Ebene
- 28: NIR-Strahlungsempfänger
- 29: Auswerteeinrichtung
- 30: Filterrad
- 31: Synchronisationseinrichtung
- 32: Gehäuse
- 33: Lichtwellenleiter
- 34: Traverse

## Patentansprüche

1. Verfahren zum Messen der Dicke einer Feuchtmittel- oder Farbemulsionsschicht auf einem Druckbild-tragenden Zylinder (1, 3) einer Offset-Druckmaschine, bei dem zwei monochrome IR-Strahlen (23a, 23b) mit unterschiedlichen Wellenlängen gleichzeitig oder nacheinander auf mindestens eine definierte Messposition (20) gerichtet und dort reflektiert werden, wobei die reflektierte Strahlung in einer Auswerteeinrichtung (29) erfasst wird, **dadurch gekennzeichnet, dass** die IR-Strahlen NIR-Strahlen sind und dass der eine reflektierte NIR-Strahl als Messstrahl (26a) vom Feuchtmittel oder der Farbemulsion im Wesentlichen absorbiert wird und der andere NIR-Strahl als Vergleichsstrahl (26b) vom Feuchtmittel oder der Farbemulsion im Wesentlichen nicht absorbiert wird.

2. Verfahren nach Anspruch 1, **dadurch gekennzeichnet, dass** der Strahlengang der reflektierten NIR-Strahlung (26) parallel zum Strahlengang der emittierten NIR-Strahlung (23) eingerichtet wird.

3. Verfahren nach einem der Ansprüche 1 bis 2, **dadurch gekennzeichnet, dass** bei der Messung der reflektierten NIR-Strahlung (26) eine Glanzfalle verwendet wird.

4. Verfahren nach einem der Ansprüche 1 bis 3, **dadurch gekennzeichnet, dass** die mindestens eine Glanzfalle durch geeignete geometrische Anordnungen der emittierten NIR-Strahlung (23) und der reflektierten NIR-Strahlung (26) an der mindestens einen Messposition (20) ausgebildet wird, indem beide Strahlengänge außerhalb der Spiegelreflexion angeordnet werden.

5. Verfahren nach einem der Ansprüche 1 bis 3, **dadurch gekennzeichnet, dass** die mindestens eine Glanzfalle durch einen Polarisator gebildet wird.

6. Verfahren nach einem der Ansprüche 1 bis 5, **dadurch gekennzeichnet, dass** eine Messung an mindestens einem definierten Messbereich (20) des die Druckplatte (15) tragenden Plattenzylinders (3) an mindestens einer Messposition (6 und/oder 7) vorgenommen wird.

7. Verfahren nach einem der Ansprüche 1 bis 5, **dadurch gekennzeichnet, dass** eine Messung an mindestens einem definierten Messbereich (20) des Gummizylinders (1) an mindestens einer Messposition (8 und/oder 9) vorgenommen wird.

8. Verfahren nach einem der Ansprüche 1 bis 7, **dadurch gekennzeichnet, dass** der Messbereich ein nicht-druckender Bereich (19) oder ein druckender Bereich (16, 17, 18) ist.

9. Verfahren nach einem der Ansprüche 1 bis 8, **dadurch gekennzeichnet, dass** die Messung entweder
durch nacheinander emittierte NIR-Strahlen (23) unterschiedlicher Wellenlänge zeitlich versetzt an der mindestens einen Messposition (20) synchron mit der Rotationsgeschwindigkeit des Druckbild-tragenden Zylinders (1, 3) erfolgt und die reflektierten NIR-Strahlen (26) über einen gemeinsamen NIR-Strahlungsempfänger (28) erfasst werden,
oder
durch gleichzeitig emittierte NIR-Strahlen (23) unterschiedlicher Wellenlänge simultan an der mindestens einen Messposition (20) synchron mit der Rotationsgeschwindigkeit des Druckbild-tragenden Zylinders (1, 3) erfolgt und die reflektierten NIR-Strahlen (26) durch einen wellenlängenselektiven Detektor erfasst werden.

10. Verfahren nach einem der Ansprüche 1 bis 9, **dadurch gekennzeichnet, dass** die gemessene Schichtdicke zum positionsgesteuerten Regeln des Auftrags des Feuchtmittels oder der Farbemulsion verwendet wird.

11. Vorrichtung zum Messen der Dicke einer Feuchtmittel- oder Farbemulsionsschicht auf einem Druckbild-tragenden Zylinder (1, 3) einer Offset-Druckmaschine, insbesondere zur Ausführung des Verfahrens nach einem der Ansprüche 1 bis 10, umfassend
eine Messoptik (21) mit einer NIR-Strahlungsquelle (22) zur Erzeugung von emittierter NIR-Strahlung (23) und einem NIR-Strahlungsempfänger (28) zum Empfangen von reflektierter NIR-Strahlung (26), wobei die Strahlengänge der emittierten NIR-Strahlung (23) und der reflektierten NIR-Strahlung (26) parallel zueinander stehen, und
eine Auswerteeinrichtung (29), die mit der Messoptik (21) verbunden ist, zur Auswertung der von dem NIR-Strahlungsempfänger (28) übermittelten Daten.

12. Vorrichtung nach Anspruch 11, **dadurch gekennzeichnet, dass** die Messoptik (21) ferner
ein Filterrad (30) mit vorzugsweise zwei Fenstern, die mit unterschiedlichen, wellenlängenselektiven Filtern versehen sind, im Strahlengang der emittierten NIR-Strahlung (23) und
eine Synchronisationseinrichtung (31), die mit dem Filterrad (30) und dem Druckbild-tragenden Zylinder (1, 3) verbunden ist,
aufweist.

13. Vorrichtung nach Anspruch 11, **dadurch gekennzeichnet, dass** die Messoptik (21) ferner mindestens ein Gitter, ein Prisma oder ein NIR-Diodenarray im Strahlengang der reflektierten NIR-Strahlung (26) aufweist.

14. Vorrichtung nach einem der Ansprüche 11 bis 13, **dadurch gekennzeichnet, dass** die die Vorrichtung ferner eine Befestigungsvorrichtung (34) aufweist, an der die Messoptik (21), vorzugsweise variabel positionierbar, angebracht ist und dass die Befestigungsvorrichtung (34) in einer Ebene mit der Rotationsachse (14) des Druckbild-tragenden Zylinders (1, 3) liegt.

15. Vorrichtung nach einem der Ansprüche 11 bis 14, **dadurch gekennzeichnet, dass** die Vorrichtung ferner mindestens einen Lichtwellenleiter (33) aufweist, der von der NIR-Strahlungsquelle (22) zu der mindestens einen Messposition (20) und von der mindestens einen Messposition (20) zu dem NIR-Strahlungsempfänger (28) führt.
